# EUROPÄISCHE PATENTSCHRIFT

(11) **EP 3 116 659 B1**
(45) Veröffentlichungstag und Bekanntmachung des Hinweises auf die Patenterteilung: **29.08.2018**
(21) Anmeldenummer: 15703551.0
(22) Anmeldetag: 30.01.2015
(51) Int. Cl.: B05B 11/00, A45D 34/04, B29C 45/16, B29C 45/00, B29L 23/20, A45D 34/00, B29C 45/14, B29K 21/00, B29K 23/00

(54) **AUSTRAGKOPF FÜR EINEN SPENDER, SPENDER MIT AUSTRAGKOPF UND VERFAHREN ZUR HERSTELLUNG EINES AUSTRAGKOPFES**
APPLICATOR HEAD FOR A DISPENSER, DISPENSER COMPRISING AN APPLICATOR HEAD, AND METHOD FOR PRODUCING AN APPLICATOR HEAD
TÊTE DE DISTRIBUTION POUR DISTRIBUTEUR, DISTRIBUTEUR ÉQUIPÉ D'UNE TÊTE DE DISTRIBUTION ET PROCÉDÉ DE FABRICATION D'UNE TÊTE DE DISTRIBUTION

(30) Priorität: 14.03.2014 DE 102014204831
(43) Veröffentlichungstag der Anmeldung: 18.01.2017
(73) Patentinhaber: Aptar Radolfzell GmbH, 78315 Radolfzell (DE)
(72) Erfinder: BRUDER, Thomas, 78467 Konstanz (DE)
(74) Vertreter: Patentanwaltskanzlei Cartagena
(86) Internationale Anmeldenummer: PCT/EP2015/051989
(87) Internationale Veröffentlichungsnummer: WO 2015/135689

(56) Entgegenhaltungen:
- EP-A1- 0 442 857
- WO-A2-2004/073873
- FR-A5- 2 127 774
- GB-A- 1 220 980
- US-A- 3 726 442
- US-A- 3 820 689
- US-A1- 2009 302 064

## Beschreibung

### Anwendungsgebiet und Stand der Technik

Die Erfindung betrifft einen Austragkopf für einen Spender zum Austrag insbesondere von kosmetischen oder pharmazeutischen Flüssigkeiten oder zum Austrag von Nahrungsmitteln. Die Erfindung betrifft weiterhin auch einen Spender mit einem solchen Austragkopf sowie Herstellungsverfahren zu einem solchen Austragkopf.

Gattungsgemäße Austragköpfe werden bei Spendern für die genannten Medien meist auf einem Flüssigkeitsspeicher aufgesetzt oder sind mit einem solchen Flüssigkeitsspeicher einstückig verbunden. Sie gestatten den Austrag von Flüssigkeit aus dem Flüssigkeitsspeicher. Sie weisen üblicherweise eine Austragöffnung und eine Betätigungshandhabe auf, mittels derer Flüssigkeit aus dem Flüssigkeitsspeicher zur Austragöffnung gefördert werden kann.

Gattungsgemäße Austragköpfe und Spender finden bei einer Vielzahl von Produkten Verwendung, die einen niedrigen Verkaufspreis haben. Es ist daher von großer Wichtigkeit, dass die Austragköpfe und Spender selbst kostengünstig herstellbar sind und dass ihre Teilkomponenten insbesondere kostengünstig montierbar sind.

Solche Austragköpfe, die meist mit einer Betätigungshandhabe und/oder Ventilen einer Pumpeinrichtung ausgestattet sind, bestehen heutzutage üblicherweise aus mehreren Einzelteilen, die getrennt gefertigt werden und nachfolgend montiert werden müssen. Die kostengünstige Montage mehrerer Teilkomponenten stellt sich dabei als technische Herausforderung dar.

### Aufgabe und Lösung

Aufgabe der Erfindung ist es primär, einen Austragkopf gattungsgemäßer Art zur Verfügung zu stellen, welcher eine kostengünstige Herstellung und Montage gestattet.

Gemäß einem ersten Aspekt der Erfindung handelt es sich bei einem erfindungsgemäßen Austragkopf um einen Austragkopf mit einer Pumpvorrichtung, die über eine Pumpkammer, über ein Einlassventil, welches zwischen einer Ansaugöffnung und der Pumpkammer angeordnet ist, über ein Auslassventil, welches zwischen der Pumpkammer und der Austragöffnung angeordnet ist, und über eine Betätigungshandhabe, mittels derer ein Innenvolumen der Pumpkammer veränderbar ist, verfügt.

Der Austragkopf gemäß diesem ersten Aspekte der Erfindung weist demnach alle Komponenten auf, die es zur Förderung von Flüssigkeit aus dem Flüssigkeitsspeicher zur Austragöffnung braucht. Das Einlass- und das Auslassventil sind üblicherweise druckabhängig öffnend ausgestaltet. Durch eine Veränderung des Innenvolumens der Pumpkammer kann ein Überdruck zum Zwecke des Austrags verursacht werden, durch den das Austragventil bei geschlossenem Einlassventil geöffnet wird. Die Rückstellung der Betätigungshandhabe verursacht einen Unterdruck zum Zwecke des Ansaugens von Flüssigkeit aus dem Flüssigkeitsspeicher, wobei das Auslassventil geschlossen und das Einlassventil geöffnet ist.
Erfindungsgemäß ist vorgesehen, dass von den drei Komponenten des Auslassventils, des Einlassventils und der Betätigungshandhabe mindestens zwei einen elastischen Abschnitt aufweisen, der aus einem elastisch verformbaren Material gebildet ist. Diese elastischen Abschnitte der mindestens zwei Komponenten sind einstückiger Teil eines gemeinsamen elastischen Bauteilabschnittes aus dem elastischen Material, der neben den elastischen Abschnitten der mindestens zwei Komponenten auch einen Verbindungsbereich zwischen diesen Komponenten bildet. Dabei befindet sich der genannte Verbindungsbereich im montierten Zustand des Austragkopfes in einem elastisch verformten Zustand.
Bei einem erfindungsgemäßen Austragkopf sind somit mindestens zwei Teile, die bestimmungsgemäß elastisch sind, durch ein gemeinsames Bauteil gebildet, das beispielsweise aus einem Elastomer-Kunststoff bestehen kann. Im Falle des Einlassventils und des Auslassventils handelt es sich vorzugsweise um Ventillippen oder anderweitige Ventilabschnitte, die bestimmungsgemäß zum Öffnen des Ventils verformungsbehaftet ausgelenkt werden. Im Falle der Betätigungshandhabe handelt es sich insbesondere um eine Betätigungsfläche, die die Pumpkammer begrenzt und deren Verformung somit das Innenvolumen der Pumpkammer beeinflusst. Die genannten mindestens zwei Komponenten sind gemeinsam mit dem Verbindungsbereich oder im Falle von mehr als zwei Komponenten gegebenenfalls auch den mehreren Verbindungsbereichen als ein einstückiger Bauteilabschnitt ausgebildet, der im montierten Zustand des Austragkopfes jedoch gegenüber dem Herstellungszustand verformt ist, so dass der Verbindungsbereich zwischen den beiden Komponenten sich dauerhaft in einem elastisch gespannten Zustand befindet.
Zwar sind die mindestens zwei Komponenten in sich beweglich. Es handelt sich aber dennoch um Komponenten, die hinsichtlich jeweils vorgesehener Halteabschnitte zueinander ortsfest sind. Die zwischen ihnen bestehende Verbindungsbereich ist also nicht elastisch, um eine Relativbewegung zueinander zuzulassen, sondern um verschiedene im Betrieb zueinander ortsfeste Komponenten gemeinsam herstellen zu können. Die im Verbindungsbereich gegebene Verformung ist demnach eine gleichbleibende, die nicht zyklisch bei beispielsweise jedem Pumpenhub eine Veränderung erfährt.

Unter dem montierten Zustand des Austragkopfes wird im Zusammenhang mit dieser Erfindung verstanden, dass der Austragkopf betriebsbereit ist, also durch bestimmungsgemäße Betätigung der Betätigungshandhabe eine Verkleinerung der Pumpkammer zum Zwecke eines Pumpvorgangs möglich ist.

Die Erfindung gestattet es, die Herstellung eines gattungsgemäßen Austragkopfes günstig zu realisieren, da für die Funktionsweise des Austragkopfes erforderliche elastische Teilkomponenten gemeinsam hergestellt werden können, auch wenn diese gemeinsame Herstellung nur in einer Relativanordnung der Komponenten während der Herstellung zweckmäßig erfolgen kann, die sich von der Relativanordnung im montierten Austragkopf unterscheidet. So können beispielsweise zwei Komponenten, die im montierten Zustand derartig relativ zueinander angeordnet sind, dass eine im gleichen Zustand stattfindende Herstellung hinterschneidungsfrei nicht möglich wäre, durch die erfindungsgemäße Ausgestaltung mit im montierten Zustand verformten Verbindungsbereich dennoch einstückig hergestellt werden und erst im Zusammenhang mit der Montage in eine hiervon abweichende Relativstellung gebracht werden. Neben der günstigeren Herstellung des entsprechenden Kunststoffbauteils liegt der Vorteil dessen auch darin, dass die automatisierte Montage vereinfacht wird, wenn die beiden Komponenten, beispielsweise das Einlassventil und die Betätigungshandhabe, durch den sie verbindenden Verbindungsbereich bereits nur noch begrenzt gegeneinander beweglich sind.

Die Verformung des Verbindungsbereichs ist vorzugsweise eine Knickverformung entlang einer geradlinigen Knickachse. Insbesondere handelt es sich vorzugsweise um einen Winkel von 90° oder einem Vielfachen hiervon, um den der Verbindungsbereich geknickt und die beiden Komponenten des elastischen Bauteilabschnitts im montierten Zustand des Austragkopfs gegeneinander verlagert sind. So kann beispielsweise zwischen einem Einlassventil und einem zu einer Einlassrichtung im 90°-Winkel stehenden Auslassventil ein um 90° abgeknickter Verbindungsbereich vorgesehen sein. Die gleiche Anordnung der Komponenten könnte jedoch auch durch zwei oder drei Knickbereiche mit in Summe 270° erzielt werden.

Von besonderem Vorteil ist es, wenn mindestens drei Komponenten Teil eines gemeinsamen elastischen Bauteilabschnittes sind, wobei diese drei Komponenten aus der Gruppe der insgesamt vier Komponenten gewählt sind, die neben dem Einlassventil, dem Auslassventil und der Betätigungshandhabe auch eine Dichtung umfassen. Diese Dichtung kann zwischen zwei vorzugsweise aus einem starreren Material gebildeten Gehäuseabschnitten wirken. Vorzugweise ist es dabei vorgesehen, dass zwei Verbindungsbereiche zwischen den mindestens drei Komponenten vorgesehen sind, die sich im montierten Zustand des Austragkopfes jeweils in einem elastisch verformten Zustand befinden. So kann insbesondere eine kettenartige Anordnung eines Einlassventiles, eines Auslassventiles und der Betätigungshandhabe vorgesehen sein, wobei alle drei Komponenten gegenüber ihrer Anordnung im Herstellungszustand relativ zu den jeweils anderen beiden Komponenten eine andere Relativlage einnehmen. Hierbei sind verschiedene Reihenfolgen der Komponenten in der kettenartigen Anordnung denkbar.

Ein zweiter Aspekt der Erfindung, der gemeinsam mit dem ersten Aspekte der Erfindung realisiert ist, sieht vor, dass ein gattungsgemäßer Austragkopf für einen Spender ein im Mehrkomponentenspritzguss hergestelltes Bauteil aufweist, welches mindestens zwei starre Bauteilabschnitte aus starrem Kunststoff, beispielsweise PP, aufweist, die durch mindestens einen elastischen Bauteilabschnitt aus elastischem Kunststoff, beispielsweise einem TPE, verbunden sind, wobei die beiden starren Bauteilabschnitte im montierten Zustand des Austragkopfes eine gegenüber einem Herstellungszustand des Bauteils geänderte Relativlage aufweisen, so dass der elastische Bauteilabschnitt im montierten Zustand des Austragkopfes elastisch verformt ist.
Ein solcher Austragkopf verfügt somit über zwei starre Bauteilabschnitte, die nicht aus dem gleichen oder aus gleich starrem Material gefertigt sein müssen, vorzugsweise jedoch aus identischem Kunststoffmaterial bestehen. Diese beiden starren Bauteilabschnitte sind durch einen Bauteilabschnitt aus elastischerem Material verbunden. Dieser Verbund aus zwei starren Abschnitten und einem elastischen Abschnitt wird im Mehrkomponentenspritzguss hergestellt, worunter verstanden wird, dass die jeweiligen Kunststoffe in einem Übergangsbereich in einer Art und Weise verbunden sind, wie es nur durch Aufschmelzen möglich ist. Hergestellt werden solche Mehrkomponentenspitzgussteile üblicherweise dadurch, dass eine Spritzgusskavität zunächst ein geringeres freies Volumen hat, welches durch einen eingebrachten ersten Kunststoff vollständig ausgefüllt wird. Anschließend wird die Kavität, in der der Spritzguss stattfindet, verglichen mit dem Ausgangszustand vergrößert und ein zweiter Kunststoff zugeführt, der den ersten Kunststoff in Grenzbereichen aufschmilzt und mit diesem eine innige Verbindung eingeht.
Ein Austragkopf gemäß dem zweiten Aspekt der Erfindung sieht vor, dass ein solches Verbundteil aus mindestens zwei Kunststoffsorten hergestellt wird, um hierdurch insbesondere auch die Montage zu erleichtern. Der elastische Bauteilabschnitt gestattet es, dass die beiden starreren Bauteilabschnitte nach der Herstellung gegeneinander verlagert werden und insbesondere miteinander kraftschlüssig oder formschlüssig, beispielsweise mittels einer Verrastung, gekoppelt werden und somit ihre Relativstellung im montierten Zustand einnehmen. Dadurch, dass die genannten Bauteilabschnitte einen Verbund bilden, können sie besonders einfach gehandhabt und montiert werden. Der elastische Bauteilabschnitt begrenzt die Relativbeweglichkeit der starreren Bauteilabschnitte im Zuge der Montage.

Ebenso wie es zum ersten Aspekt der Erfindung bereits beschrieben wurde, wird der elastische Bauteilabschnitt vorzugsweise geknickt, um die Ausrichtung der beiden starren Bauteilabschnitte gegeneinander zu ändern. Insbesondere vorzugsweise wird der elastische Bauteilabschnitt derart verformt, dass die beiden starreren Bauteilabschnitte gegenüber ihrer Relativposition im Fertigungszustand um 180° gegeneinander verschwenkt sind. Sie können so zwei nebeneinander hergestellte Teilabschnitte eines Gehäuses des Austragkopfes bilden, die durch das genannte Umklappen aufeinander- oder ineinandergesetzt werden.

Der elastische Bauteilabschnitt bildet in einem solchen Fall die Funktion eines Gelenks. Die Funktion des elastischen Bauteilabschnitts muss sich jedoch nicht auf die Koppelung der starren Bauteilabschnitte und die Unterstützung der Relativbewegung derselben beschränken, sondern er erfüllt vorzugsweise weitere Funktionen.

So ist es insbesondere von Vorteil, wenn der elastische Bauteilabschnitt auch einen Dichtungsabschnitt aufweist, der einen Kontaktbereich der beiden starren Bauteilabschnitte im montierten Zustand des Austragkopfes abdichtet. Vorzugsweise handelt es sich dabei um einen axial wirkenden Dichtungsabschnitt, der durch Zusammenfügen der beiden starren Bauteilabschnitte zusammengedrückt wird und eine dichte Verbindung schafft. Dieser Dichtungsabschnitt kann insbesondere im Bereich einer Pumpkammer vorgesehen sein, die durch die beiden starreren Bauteilabschnitte gemeinsam begrenzt wird. Besonders vorteilhaft ist hierbei, wenn einer der starreren Bauteilabschnitte eine umlaufende nutartige Vertiefung aufweist, welche durch den elastischen Werkstoff ausgefüllt wird und welche beim Einsetzen des anderen starren Abschnitts dessen Auflagefläche bildet.

Weitere Komponenten, von denen der elastische Bauteilabschnitt ebenfalls einzelne, einige oder alle umfassen kann, sind ein elastisch verformbarer Abschnitt eines Einlassventils, ein elastisch verformbarer Abschnitt eines Auslassventils oder ein elastisch verformbarer Abschnitt einer Betätigungshandhabe. Es handelt sich hier um die bereits zum ersten Aspekte der Erfindung genannten Abschnitte, die im Zusammenhang mit einer Pumpeinrichtung vorzugsweise als elastische Abschnitte ausgebildet sind. Im Falle einer Betätigungshandhabe begrenzt diese, vorzugsweise gemeinsam mit den beiden starren Bauteilabschnitten, eine Pumpkammer und kann durch Verformen deren Innenvolumen beeinflussen. Im Falle der Ventile handelt es sich vorzugsweise um Dichtlippen oder anderweitige Flächenabschnitte, welche elastisch an Gegenflächen anliegen und durch entsprechende Druckverhältnisse beidseitig zum Öffnen des jeweiligen Ventils vom Gegenabschnitt abhebbar oder gegen den Gegenabschnitt anspressbar sind. Die genannten Komponenten bzw. deren elastische Abschnitte können ortsfest an einem der starren Abschnitte vorgesehen sein, worunter zu verstehen ist, dass sie gemeinsam mit diesen bei der Montage verlagert werden. Die Komponenten können jedoch auch gegenüber den starren Abschnitten beweglich sein und ggf. durch die beiden starren Abschnitte im montierten Zustand gemeinsam in Position gehalten werden. Insbesondere von Vorteil ist es, wenn das Einlassventil an einem ersten der starren Bauteilabschnitte lagefixiert ist und/oder die Betätigungshandhabe am zweiten der starren Bauteilabschnitte lagefixiert ist.

Was die Funktionen der beiden starren Bauteilabschnitte angeht, so wird als vorteilhaft angesehen, wenn ein erster starrer Bauteilabschnitt einen umlaufenden Wandungsabschnitt aufweist, der zu einer Seite durch einen elastischen Abschnitt der Betätigungshandhabe verschlossen ist, welcher eine verformbare Betätigungsfläche bildet. Der zweite starre Bauteilabschnitt ist vorzugsweise mit einer Kopplungsvorrichtung zur Ankopplung an einen Flüssigkeitsspeicher vorgesehen. Dieser zweite starre Bauteilabschnitt bildet vorzugsweise einen Teil der Innenwandung einer Pumpenkammer, welche im Übrigen durch die Innenseite des genannten umlaufenden Wandungsabschnitts des ersten starren Bauteilabschnitts und die Innenseite an diesem vorgesehenen verformbaren Betätigungsfläche begrenzt wird.

Die genannten elastischen Komponenten, die durch den elastischen Bauteilabschnitt gebildet sein können, können in der bereits beschriebenen Weise zu einem der starren Bauteilabschnitte lagefixiert sein, so dass sie sich gegenüber diesem starren Bauteilabschnitt im Zuge der Montage des Austragkopfes nicht relativ bewegen. Eine besonders vorteilhafte Gestaltung sieht jedoch hinsichtlich einer oder mehrerer dieser Komponenten vor, dass diese in einem Aufnahmebereich angeordnet ist, der durch die beiden starren Abschnitte bzw. hieran vorgesehene Wandungsabschnitte gemeinsam gebildet wird, die im montierten Zustand des Austragkopfes ineinandergeschoben werden, so dass der genannte Aufnahmebereich zwischen ihnen frei bleibt und eine elastische Komponente aufnehmen kann. Insbesondere kann es sich bei der so durch die beiden starren Bauteilabschnitte gemeinsam und erst im montierten Zustand lagefixierten Komponente um ein Auslassventil handeln, welches die Pumpkammer mit einer umgebenden Atmosphäre verbindet. Von diesem Auslassventil kann insbesondere ein eine Ventilöffnung umgebender Flächenabschnitt, der der Fixierung dient, im genannten Aufnahmebereich angeordnet sein.

Wie bereits erwähnt, können insbesondere auch das Einlass- und das Auslassventil zumindest abschnittsweise durch das elastische Material des elastischen Bauteilabschnitts gebildet sein. Von Vorteil ist es, wenn das Auslassventil und/oder das Einlassventil als Ventil mit einer verschließbaren Durchgangsöffnung ausgebildet sind, wobei diese Durchgangsöffnung vollständig durch elastisches Material des elastischen Bauteilabschnitts umgeben wird. Es handelt sich somit vorzugsweise um Ventile, bei denen alle ventilfunktionswesentlichen Abschnitte durch den elastischen Bauteilabschnitt gebildet sind, so dass die Funktionsweise des Ventils auch gewährleistet ist, wenn der entsprechende Teilabschnitt des elastischen Bauteilabschnitts bei der Montage nicht perfekt positioniert wird.

Die Erfindung betrifft darüber hinaus einen Spender zum Austrag insbesondere von kosmetischen oder pharmazeutischen Flüssigkeiten oder auch von Nahrungsmitteln, der über einen Flüssigkeitsspeicher und einen Austragkopf oben beschriebener Art verfügt. Vorzugsweise ist der Austragkopf als separate Baugruppe gebildet, die mit dem Flüssigkeitsspeicher gekoppelt werden kann. Alternativ ist es jedoch auch denkbar, dass der Flüssigkeitsspeicher mit einem der beiden starren Bauteilabschnitte des Austragkopfes fest und insbesondere einstückig verbunden ist.

Die Erfindung betrifft darüber hinaus auch das Herstellungsverfahren zur Herstellung des Austragkopfes gemäß oben genanntem ersten und zweiten Aspekt der Erfindung.

### Kurzbeschreibung der Zeichnungen

Weitere Aspekte und Vorteile der Erfindung ergeben sich aus der nachfolgenden Beschreibung eines bevorzugten Ausführungsbeispiels der Erfindung, welches anhand der Figuren erläutert wird. Dabei zeigen:
- Fig. 1: einen erfindungsgemäßen Spender mit einem erfindungsgemäßen Austragkopf in einer geschnittenen Seitenansicht,
- Fig. 2: den Austragkopf des Spenders der Fig. 1 in einer geschnittenen, perspektivischen Ansicht,
- Fig. 3A und 3B: den Austragkopf des Spenders der Fig. 1 in seinem Zustand nach Herstellung und vor Montage und
- Fig. 4: nochmals den Austragkopf in geschnittener Ansicht nach der Montage. Detaillierte Beschreibung des Ausführungsbeispiels/der Ausführungsbeispiele

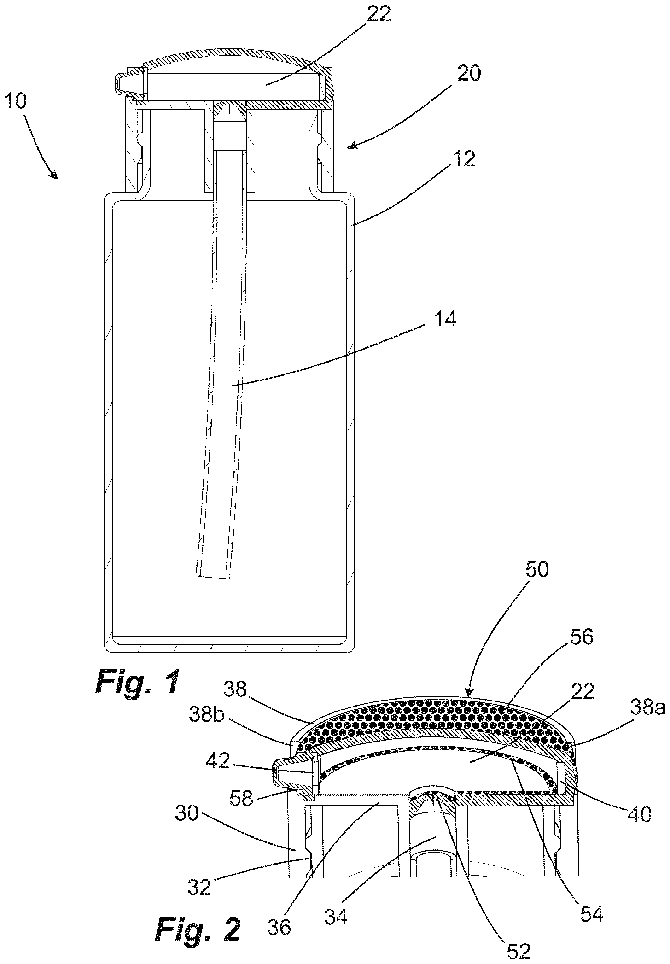

Fig. 1 zeigt einen erfindungsgemäßen Spender 10, der über einen Medienspeicher 12 und einen Austragkopf 20 verfügt. Der Spender 10 kann insbesondere für kosmetische Flüssigkeiten wie Cremes und Lotionen oder für Nahrungsmittel wie Ketchup oder Senf Verwendung finden. Auch eine Verwendung für pharmazeutische Flüssigkeiten ist möglich.

Der Spender 10 zeichnet sich durch seine geringen Herstellungskosten aus. Neben dem genannten Flüssigkeitsspeicher 12 sowie einem Steigrohr 14 ist lediglich ein weiteres Bauteil vorgesehen, welches den gesamten Austragkopf 20 bildet.

Dieses Bauteil, das den Austragkopf 20 bildet, ist ein Bauteil, welches im Kunststoff-Mehrkomponentenspritzguss hergestellt wird. Durch diese Art der Fertigung können unterschiedliche Kunststoffe durch sequentielles Einbringen in eine Spritzgusskavität zu einem einheitlichen Bauteil geformt werden, dessen Teilabschnitte aus unterschiedlichem Kunststoff miteinander stoffschlüssig und innig verbunden sind. Auch wenn vorliegend die Verwendung dieses Mehrkomponentenspritzgusses als sehr vorteilhaft angesehen wird, können einige Aspekte der Erfindung auch bei einer alternativen Herstellung vorteilhaft sein, bei der die nachfolgend noch beschriebenen starren Bauteilabschnitte und der elastische Bauteilabschnitt des Austragkopfes 20 separat hergestellt sind und miteinander erst nach dieser separaten Herstellung verbunden werden.

In der Fig. 2 ist der Austragkopf 20 vergrößert dargestellt. Er verfügt über insgesamt drei Bauteilabschnitte 30, 40, 50.

Ein erster starrer Bauteilabschnitt 30 aus Polypropylen (PP) ist dafür vorgesehen, am Flüssigkeitsspeicher befestigt zu werden, und verfügt hierfür über einen Rastkopplungsmechanismus 32. Dieser erste Bauteilabschnitt verfügt weiterhin über einen Zuflusskanal 34, der in eine Pumpkammer 22 mündet, deren untere Abschlussfläche 36 ebenfalls durch den ersten starren Bauteilabschnitt 30 gebildet wird. Weiterhin stellt der erste starre Bauteilabschnitt 30 eine weitgehend umlaufende Borte 38 zur Verfügung, die lediglich in zwei Bereichen 38a, 38b unterbrochen ist.

Beim zweiten starren Bauteilabschnitt 40, der ebenfalls aus Polypropylen besteht, handelt es sich um einen ringförmigen Bauteilabschnitt, der lediglich im Bereich eines Austragkanals mit einer Durchbrechung 42 versehen ist.

Der dritte Bauteilabschnitt des Spenders 20 ist ein Bauteilabschnitt aus einem elastischen Material wie einem TPE. Seine Schnittflächen sind in Fig. 2 schraffiert dargestellt. Seine Oberflächen sind gepunktet dargestellt.

Dieser dritte Bauteilabschnitt 50 bildet eine Reihe von Teilkomponenten des Austragkopfes 20. So bildet er insbesondere ein im Zuflusskanal 34 angeordnetes und bei Unterdruck in der Pumpkammer 22 öffnendes Schlitzventil 52, eine umlaufende Dichtung 54, die in einer außenseitigen Vertiefung der Fläche 36 vorgesehen ist, eine Betätigungshandhabe 56, die gegenüberliegend zur Fläche 36 die Pumpkammer 22 begrenzt, und ein ebenfalls vorliegend als Schlitzventil ausgestaltetes Auslassventil 58, welches so angeordnet ist, dass es durch die Durchbrechung 38b in der Borte 38 hindurchragt und durch die Öffnung 42 im zweiten starren Bauteilabschnitt 40 mit Flüssigkeit versorgt werden kann.

Die Komponenten 52, 56, 58 sind im Betrieb des montierten Spenders bestimmungsgemäß verformbar, um ihre Funktion als Ventil bzw. Handhabe zu erfüllen. Sie alle haben jedoch auch zueinander ortsfeste Halteabschnitte, die nach abgeschlossener Montage in definierter Relativlage fixiert werden. Der Halteabschnitt der Betätigungshandhabe 56 ist der ringförmige die Handhabe umgebende äußere Haltebereich. Der Halteabschnitt der Ventils 52 wird durch die Grenzfläche Anlagefläche gebildet, mit der das Ventil 52 an der Innenseite der Ansaugöffnung 34 anliegt. Der Halteabschnitt des Ventils 58 wird durch den ringförmigen und im Betrieb weitgehend unverformten Bereich gebildet, der an einer Anlagefläche 44 anliegt.

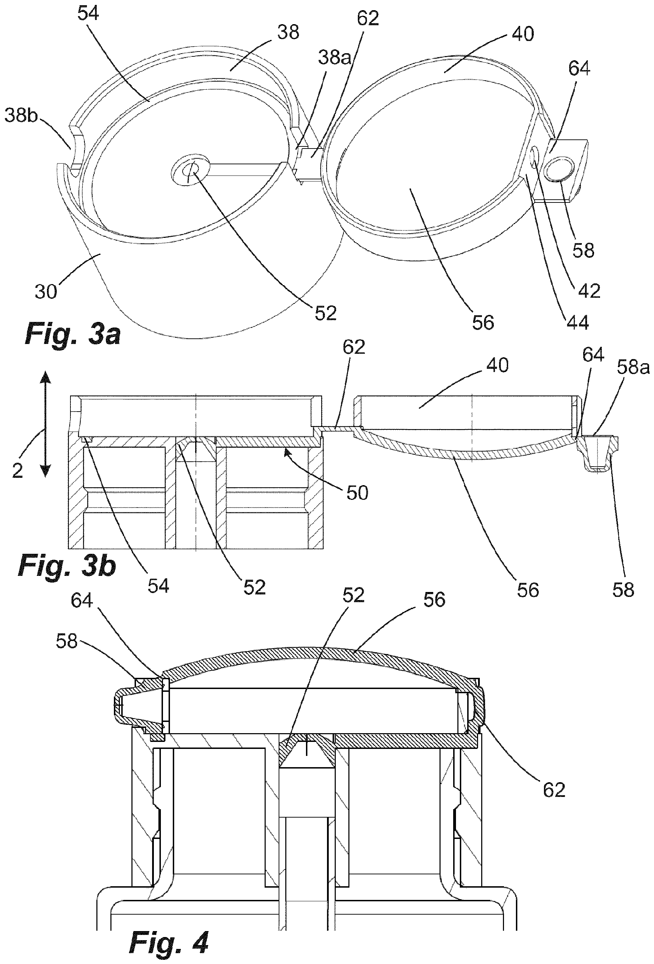

Der elastische Bauteilabschnitt 50 ist einstückig ausgebildet. Alle genannten Komponenten vom Einlassventil 52 bis zum Auslassventil 58 sind somit in einem gemeinsamen Spritzgussvorgang hergestellt worden. Dies erfolgt allerdings nicht in der Relativanordnung, die die genannten Komponenten 52 bis 58 in den Fig. 1 und 2 einnehmen, sondern in jener Relativausrichtung, die sich den Fig. 3A und 3B entnehmen lässt. Bezugnehmend auf die Fig. 3B ist zu erkennen, dass im Herstellungszustand, also in jenem Zustand, der sich nach dem Spritzgussvorgang einstellt, bei elastisch nicht verformtem elastischen Bauteilabschnitt 50 die Ausrichtung der Komponenten 52 bis 58 so geartet ist, dass ein entsprechendes Werkzeug, in dem der Spritzgussvorgang stattfindet, hinterschneidungsfrei in der durch den Pfeil 2 gekennzeichneten Richtung entformt werden kann. Der noch nicht montierte Austragkopf, der aus den Fig. 3A und 3B ersichtlich ist, kann somit durch einen einheitlichen, zweistufigen Spritzgussvorgang hergestellt werden. Zunächst werden dabei in einer zunächst zweigeteilten Kavität die starren Bauteilabschnitte 30, 40 gespritzt. Anschließend wird die Kavität vergrößert, wobei die Teilkavitäten verbunden werden, und es wird der elastische Kunststoff für den elastischen Bauteilabschnitt 50 eingebracht, weleher die beiden starren Bauteilabschnitte in Kontaktbereichen wieder aufschmilzt und dadurch eine innige Verbindung zwischen den Bauteilabschnitten herstellt.

Nach Abschluss dieses zweistufigen Zweikomponentenspritzgussvorgangs werden die starren Bauteilabschnitte 30, 40 gegeneinander verlagert, wobei im Zuge dessen auch eine Verformung des elastischen Bauteilabschnitts 50 in zwei Verbindungsbereichen 62, 64 stattfindet. Der Verbindungsbereich 62 wird zweimal um jeweils 90° abgeknickt, so dass die Betätigungshandhabe 56, die nach der urformenden Herstellung noch neben der durch den ersten starren Abschnitt 40 vorgesehenen Pumpkammer angeordnet ist, dann diese nach oben abschließt. Der Verbindungsbereich 64 wird nur um 90° abgeknickt, so dass das Auslassventil 58 in seine in den Fig. 1 und 2 dargestellte Sollposition gelangt, in der es bezogen auf die Richtung 2 radial ausgerichtet ist. Gehalten wird das Auslassventil 56 dabei dadurch, dass es in einem Zwischenraum zwischen dem zweiten starren Bauteilabschnitt 40 und der Borte 38 des ersten starren Bauteilabschnitts 30 eingeklemmt wird. Durch eine am Auslassventil innenseitig angeformte umlaufende Erhebung 58a, die an der Anlagefläche 44 des zweiten starren Bauteilabschnitts zur Anlage kommt, wird ein hohes Maß an Dichtheit erreicht.

Im montierten Zustand der Fig. 4 ist der Austragkopf einsatzbereit. Der elastische Bauteilabschnitt 50 ist in den Verbindungsbereichen 62, 64 elastisch verformt, wobei diese Verformung aufgrund der Lagefixierung der starren Bauteilabschnitte 40, 50 keine negativen Auswirkungen hat. Diese elastische Verformung gestattet es jedoch, den in Fig. 4 dargestellten montierten Austragkopf in der beschriebenen Weise aus einem Bauteil aufzubauen, welches innerhalb eines einheitlichen, vorliegend zweistufigen, Spritzgussvorgangs erzeugt wurde. Dieser nur eine Spritzgussvorgang führt zusammen mit der einfachen Montierbarkeit zu geringen Herstellungskosten.

## Patentansprüche

1. Austragkopf (20) für einen Spender (10) zum Austrag insbesondere von kosmetischen oder pharmazeutischen Flüssigkeiten und von Nahrungsmitteln,
mit einer Pumpvorrichtung (22, 52, 56, 58), umfassend mindestens
- eine Pumpkammer (22),
- ein Einlassventil (52), welches zwischen einer Ansaugöffnung (34) und der Pumpkammer (22) angeordnet ist,
- ein Auslassventil (58), welches zwischen der Pumpkammer (22) und einer Austragöffnung angeordnet ist, und
- eine Betätigungshandhabe (56), mittels derer ein Innenvolumen der Pumpkammer (22) veränderbar ist,
wobei
- mindestens zwei der drei Komponenten aus der Gruppe umfassend das Auslassventil (58), das Einlassventil (52) und die Betätigungshandhabe (56) jeweils zumindest einen elastischen Abschnitt aufweisen, der aus einem elastisch verformbaren Material gebildet ist,
- die mindestens zwei Komponenten (52, 56, 58) jeweils einen Halteabschnitt aus dem elastischen Material aufweisen, wobei diese Halteabschnitte im montierten Spender in zueinander ortsfester Lage angeordnet sind, **dadurch gekennzeichnet, dass**
- die elastischen Abschnitte der mindestens zwei Komponenten (52, 68, 58) einstückiger Teil eines aus einem einheitlichen elastischen Material bestehenden und zusammenhängenden elastischen Bauteilabschnitts (50) sind, der einen Verbindungsbereich (62, 64) zwischen den mindestens zwei Komponenten (52, 68, 58) aufweist, und
- der Verbindungsbereich (62, 64) zwischen den Halteabschnitten sich im montierten Zustand des Austragkopfes (20) in einem elastisch verformten Zustand befindet.

2. Austragkopf (20) nach Anspruch 1,
**dadurch gekennzeichnet, dass**
der elastische Bauteilabschnitt (50) im Verbindungsbereich (62, 64) abgeknickt ist, vorzugsweise um ca. 90° oder ein Vielfaches davon.

3. Austragkopf (20) nach einem der vorstehenden Ansprüche,
**dadurch gekennzeichnet, dass**
der elastische Bauteilabschnitt mindestens drei Komponenten (52, 54, 56, 58) der vier Komponenten (52, 54, 56, 58) aus der Gruppe umfassend das Auslassventil (58), das Einlassventil (52), die Betätigungshandhabe (56) und eine Dichtung (54) aufweist, wobei mindestens zwei Verbindungsbereiche (62, 64) zwischen den mindestens drei Komponenten vorgesehen sind, die sich im montierten Zustand des Austragkopfes (20) jeweils in einem elastisch verformten Zustand befindet.

4. Austragkopf (20) nach einem der Ansprüche 1 bis 3,
**gekennzeichnet durch**
ein im Mehrkomponentenspritzguss hergestelltes Bauteil, welches mindestens zwei starre Bauteilabschnitte (30, 40) aus starrem Kunststoff aufweist, die durch den mindestens einen elastischen Bauteilabschnitt (50) aus einem elastischen Kunststoff verbunden sind, wobei die beiden starren Bauteilabschnitte (30, 40) im montierten Zustand des Austragkopfes (20) eine gegenüber einem Herstellungszustand des Bauteils geänderte Relativlage aufweisen, so dass der elastische Bauteilabschnitt (62, 64) im montierten Zustand des Austragkopfes elastisch verformt ist.

5. Austragkopf (20) nach Anspruch 4,
**dadurch gekennzeichnet, dass**
der elastische Bauteilabschnitt (50) einen Dichtungsabschnitt (54) aufweist, der einen Kontaktbereich der beiden starren Abschnitte (30, 40) im montierten Zustand des Austragkopfes (20) abdichtet.

6. Austragkopf (20) nach Anspruch 5,
**dadurch gekennzeichnet, dass**
der Dichtungsabschnitt (54) als axial wirkende Dichtung ausgebildet ist.

7. Austragkopf (20) nach einem der Ansprüche 4 bis 6,
**dadurch gekennzeichnet, dass**
der elastische Bauteilabschnitt (50) eine oder mehrere der folgenden Komponenten umfasst:
- einen elastisch verformbaren Abschnitt eines Einlassventils (52),
- einen elastisch verformbaren Abschnitt einer Auslassventils (58),
- eine elastisch verformbaren Abschnitt einer Betätigungshandhabe (56),

8. Austragkopf (20) nach einem der Ansprüche 4 bis 7,
**dadurch gekennzeichnet, dass**
- einer der starren Bauabschnitte (40) einen umlaufenden Wandungsabschnitt aufweist, der zu einer Seite durch einen elastischen Abschnitt der Betätigungshandhabe (56) verschlossen ist, der eine verformbare Betätigungsfläche bildet und/oder
- einer der starren Bauteilabschnitte (30) eine Kopplungsvorrichtung (32) zu Ankopplung an einen Flüssigkeitsspeicher (12) aufweist.

9. Austragkopf (20) nach einem der Ansprüche 4 bis 8,
**dadurch gekennzeichnet, dass**
die beiden starren Bauteilabschnitte (30, 40) umlaufende Wandungsabschnitte (38) aufweisen, wobei im montierten Zustand des Austragkopfes (20) einer der zylindrischen Wandungsabschnitte in den anderen zylindrischen Wandungsabschnitte (38) eingeschoben ist, so dass zwischen den Wandungsabschnitten ein Aufnahmebereich freibleibt, in den sich der elastische Bauteilabschnitt (50) erstreckt.

10. Austragkopf (20) nach einem der Ansprüche 4 bis 9,
**dadurch gekennzeichnet, dass**
ein das Auslassventil (58) umgebender Flächenabschnitt des elastischen Bauteilabschnitts (50) im Aufnahmebereich zwischen den Wandungsabschnitten (38) angeordnet ist.

11. Austragkopf (20) nach einem der vorstehenden Ansprüche,
**dadurch gekennzeichnet, dass**
mindestens zwei Komponenten aus der Gruppe umfassend den elastischen Abschnitt des Auslassventils (58), den elastischen Abschnitt des Einlassventils (52) und den elastischen Abschnitt der Betätigungshandhabe (56) eine Formgebung aufweisen, die eine hinterschneidungsfreie Entformung in einer jeweilig spezifischen Entformungsrichtung gestattet, wobei die zwei Komponenten (52, 56, 58) im montierten Zustand des Austragkopfes derart gegenüber dem Herstellungszustand gegeneinander verlagert sind, dass ihre jeweiligen Entformungsrichtungen nichtparallel zueinander ausgerichtet sind.

12. Austragkopf (20) nach einem der vorstehenden Ansprüche,
**dadurch gekennzeichnet, dass**
das Auslassventil (58) und/oder das Einlassventil (52) als Ventil mit einer verschließbaren Durchgangsöffnung ausgebildet sind, wobei die Durchgangsöffnungen vollständig durch elastisches Material des elastischen Bauteilabschnitts (50) umgeben werden.

13. Spender (10) zum Austrag insbesondere von kosmetischen oder pharmazeutischen Flüssigkeiten und von Nahrungsmitteln, umfassend
- einen Flüssigkeitsspeicher (12) und
- einen Austragkopf (20),
**dadurch gekennzeichnet, dass**
der Austragkopf (20) nach einem der vorstehenden Ansprüchen ausgebildet ist.

14. Verfahren zur Herstellung eines Austragkopfes (20) für einen Spender (10) zur Verwendung zum Austrag insbesondere von kosmetischen oder pharmazeutischen Flüssigkeiten und von Nahrungsmitteln,
**dadurch gekennzeichnet, dass**
- ein elastischer Bauteilabschnitt (50) aus einem elastisch verformbaren Material gefertigt wird, wobei dieser elastische Bauteilabschnitt (50) mindestens elastische Abschnitte zweier Komponenten (52, 56, 58) aus der Gruppe umfassend ein Einlassventil (52), ein Auslassventil (58) und eine Betätigungshandgabe (56) aufweist, und wobei die mindestens zwei Komponenten (52, 56, 58) jeweils einen Halteabschnitt aus dem elastischen Material zur zueinander ortsfesten Lage im montierten Spender aufweisen, und
- im Rahmen der Montage die mindestens zwei elastischen Abschnitte der mindestens zwei Komponenten (52, 56, 58) in einer von der Relativlage beim Spitzgießen abweichenden Relativlage zueinander lagefixiert werden, wobei die Halteabschnitte in zueinander ortsfester Lage angeordnet werden und ein Verbindungsbereich (62, 64) zwischen den Halteabschnitten des elastischen Bauteilabschnitt (50) hierbei elastisch verformt wird.

## Claims

1. Applicator head (20) for a dispenser (10), in particular for applying cosmetic or pharmaceutical liquids and foodstuffs, with a pump device (22, 52, 56, 58) comprising at least
- a pump chamber (22),
- an inlet valve (52), which is arranged between a suction opening (34) and the pump chamber (22),
- an outlet valve (58), which is arranged between the pump chamber (22) and an applicator opening, and
- an actuating handle (56), by means of which an inner volume of the pump chamber (22) can be changed,
wherein
- at least two of the three components from the group comprising the outlet valve (58), the inlet valve (52) and the actuating handle (56) each have at least one elastic portion which is made of an elastically deformable material,
- the at least two components (52, 56, 58) each have a holding portion made from the elastic material, wherein these holding portions are arranged in a fixed position with respect to one another in the assembled dispenser, **characterized in that**
- the elastic portions of the at least two components (52, 56, 58) are an integral part of a continuous elastic structural portion (50) which is made of a uniform elastic material and which has a connection area (62, 64) between the at least two components (52, 68, 58), and
- the connection area (62, 64) between the holding portions, in the assembled state of the applicator head (20), is in an elastically deformed state.

2. Applicator head (20) according to Claim 1, **characterized in that** the elastic structural portion (50) is kinked in the connection area (62, 64), preferably by ca. 90° or a multiple thereof.

3. Applicator head (20) according to either of the preceding claims, **characterized in that** the elastic structural portion has at least three components (52, 54, 56, 58) of the four components (52, 54, 56, 58) from the group comprising the outlet valve (58), the inlet valve (52), the actuating handle (56) and a seal (54), wherein at least two connection areas (62, 64) are provided between the at least three components and, in the assembled state of the applicator head (20), are each in an elastically deformed state.

4. Applicator head (20) according to one of Claims 1 to 3, **characterized by** a structure which is produced in a multi-component injection mold and which has at least two rigid structural portions (30, 40) made of rigid plastic, which structural portions (30, 40) are connected by at least one elastic structural portion (50) made of an elastic plastic, wherein the two rigid structural portions (30, 40), in the assembled state of the applicator head (20), have a relative position which is altered in relation to a production state of the structure, such that the elastic structural portion (62, 64) is elastically deformed in the assembled state of the applicator head.

5. Applicator head (20) according to Claim 4, **characterized in that** the elastic structural portion (50) has a sealing portion (54) which seals off a contact area of the two rigid portions (30, 40) in the assembled state of the applicator head (20).

6. Applicator head (20) according to Claim 5, **characterized in that** the sealing portion (54) is designed as an axially acting seal.

7. Applicator head (20) according to one of Claims 4 to 6, **characterized in that** the elastic structural portion (50) comprises one or more of the following components:
- an elastically deformable portion of an inlet valve (52),
- an elastically deformable portion of an outlet valve (58),
- an elastically deformable portion of an actuating handle (56).

8. Applicator head (20) according to one of Claims 4 to 7, **characterized in that**
- one of the rigid structural portions (40) has a peripheral wall portion which, to one side, is closed by an elastic portion of the actuating handle (56), which elastic portion forms a deformable actuating surface, and/or
- one of the rigid structural portions (30) has a coupling device (32) for coupling to a liquid reservoir (12).

9. Applicator head (20) according to one of Claims 4 to 8, **characterized in that** the two rigid structural portions (30, 40) have peripheral wall portions (38), wherein one of the cylindrical wall portions is pushed into the other cylindrical wall portion (38) in the assembled state of the applicator head (20), such that a receiving area, into which the elastic structural portion (50) extends, remains free between the wall portions.

10. Applicator head (20) according to one of Claims 4 to 9, **characterized in that** a surface portion of the elastic structural portion (50) surrounding the outlet valve (58) is arranged in the receiving area between the wall portions (38).

11. Applicator head (20) according to one of the preceding claims, **characterized in that** at least two components from the group comprising the elastic portion of the outlet valve (58), the elastic portion of the inlet valve (52) and the elastic portion of the actuating handle (56) have a configuration which permits undercut-free demolding in a respectively specific demolding direction, wherein the two components (52, 56, 58), in the assembled state of the applicator head, are displaced relative to each other, in relation to the production state, in such a way that their respective demolding directions are oriented non-parallel to each other.

12. Applicator head (20) according to one of the preceding claims, **characterized in that** the outlet valve (58) and/or the inlet valve (52) are designed as valves with a closeable through-opening, wherein the through-openings are completely surrounded by elastic material of the elastic structural portion (50).

13. Dispenser (10), in particular for applying cosmetic or pharmaceutical liquids and foodstuffs, comprising
- a liquid reservoir (12) and
- an applicator head (20),
**characterized in that** the applicator head (20) is designed according to one of the preceding claims.

14. Method for producing an applicator head (20) for a dispenser (10) for use in particular for applying cosmetic or pharmaceutical liquids and foodstuffs, **characterized in that**
- an elastic structural portion (50) made of an elastically deformable material is produced, wherein this elastic structural portion (50) has at least elastic portions of two components (52, 56, 58) from the group comprising an inlet valve (52), an outlet valve (58) and an actuating handle (56), and
wherein the at least two components (52, 56, 58) each have a holding portion made from the elastic material for the fixed positioning with respect to one another in the assembled dispenser, and
- during assembly, the at least two elastic portions of the at least two components (52, 56, 58) are fixed in position with respect to each other in a relative position deviating from the relative position during the injection molding, wherein the holding portions are arranged in a fixed position with respect to one another and a connection area (62, 64) between the holding portions of the elastic structural portion (50) is elastically deformed in the process.

## Revendications

1. Tête de distribution (20) pour un distributeur (10) pour distribuer notamment des liquides cosmétiques ou pharmaceutiques et des aliments, comprenant un dispositif de pompe (22, 52, 56, 58), comprenant au moins :
- une chambre de pompe (22),
- une soupape d'entrée (52), qui est disposée entre l'ouverture d'aspiration (34) et la chambre de pompe (22),
- une soupape de sortie (58) qui est disposée entre la chambre de pompe (22) et une ouverture de distribution, et
- une manette d'actionnement (56) au moyen de laquelle un volume interne de la chambre de pompe (22) peut être varié,
- au moins deux des trois composants du groupe comprenant la soupape de sortie (58), la soupape d'entrée (52) et la manette d'actionnement (56) présentant à chaque fois au moins une portion élastique qui est formée en un matériau déformable élastiquement,
- les au moins deux composants (52, 56, 58) présentant à chaque fois une portion de retenue constituée du matériau élastique, ces portions de retenue, dans le distributeur monté, étant disposées dans une position fixée les unes par rapport aux autres, **caractérisée en ce que**
- les portions élastiques des au moins deux composants (52, 56, 58) sont une pièce monobloc d'une portion de composant élastique (50) uniforme constituée d'un matériau élastique unitaire, qui présente une région de connexion (62, 64) entre les au moins deux composants (52, 56, 58), et
- la région de connexion (62, 64) entre les portions de retenue se trouve dans l'état monté de la tête de distribution (20) dans un état déformé élastiquement.

2. Tête de distribution (20) selon la revendication 1,
**caractérisée en ce que**
la portion de composant élastique (50) est pliée dans la région de connexion (62, 64), de préférence d'environ 90° ou d'un multiple de 90°.

3. Tête de distribution (20) selon l'une quelconque des revendications précédentes,
**caractérisée en ce que**
la portion de composant élastique présente au moins trois composants (52, 54, 56, 58) des quatre composants (52, 54, 56, 58) du groupe comprenant la soupape de sortie (58), la soupape d'entrée (52), la manette d'actionnement (56) et un joint d'étanchéité (54), au moins deux régions de connexion (62, 64) étant prévues entre les au moins trois composants, lesquelles se trouvent dans l'état monté de la tête de distribution (20) à chaque fois dans un état déformé élastiquement.

4. Tête de distribution (20) selon l'une quelconque des revendications 1 à 3,
**caractérisée par**
un composant fabriqué par moulage par injection à plusieurs composants, qui présente au moins deux portions de composant rigides (30, 40) en plastique rigide qui sont connectées par l'au moins une portion de composant élastique (50) en plastique élastique, les deux portions de composant rigides (30, 40), dans l'état monté de la tête de distribution (20), présentant une position relative modifiée par rapport à un état de fabrication du composant de telle sorte que la portion de composant élastique (62, 64), dans l'état monté de la tête de distribution, soit déformée élastiquement.

5. Tête de distribution (20) selon la revendication 4,
**caractérisée en ce que**
la portion de composant élastique (50) présente une portion de joint d'étanchéité (54) qui étanchéifie une région de contact des deux portions rigides (30, 40) dans l'état monté de la tête de distribution (20).

6. Tête de distribution (20) selon la revendication 5,
**caractérisée en ce que**
la portion de joint d'étanchéité (54) est réalisée sous forme de joint d'étanchéité agissant axialement.

7. Tête de distribution (20) selon l'une quelconque des revendications 4 à 6,
**caractérisée en ce que**
la portion de composant élastique (50) comprend un ou plusieurs des composants suivants :
- une portion déformable élastiquement d'une soupape d'entrée (52),
- une portion déformable élastiquement d'une soupape de sortie (58),
- portion déformable élastiquement d'une manette d'actionnement (56).

8. Tête de distribution (20) selon l'une quelconque des revendications 4 à 7,
**caractérisée en ce que**
- l'une des portions de composant rigides (40) présente une portion de paroi périphérique qui est fermée d'un côté par une portion élastique de la manette d'actionnement (56) qui forme une surface d'actionnement déformable et/ou
- l'une des portions de composant rigides (30) présente un dispositif d'accouplement (32) pour l'accouplement à un réservoir de liquide (12).

9. Tête de distribution (20) selon l'une quelconque des revendications 4 à 8,
**caractérisée en ce que**
les deux portions de composant rigides (30, 40) présentent des portions de paroi périphériques (38), dans l'état monté de la tête de distribution (20), l'une des portions de paroi cylindriques étant enfoncée dans l'autre portion de paroi cylindrique (38), de telle sorte qu'il subsiste entre les portions de parois une région de réception dans laquelle s'étend la portion de composant élastique (50).

10. Tête de distribution (20) selon l'une quelconque des revendications 4 à 9,
**caractérisée en ce**
**qu'**une portion de surface de la portion de composant élastique (50), entourant la soupape de sortie (58), est disposée dans la région de réception entre les portions de parois (38).

11. Tête de distribution (20) selon l'une quelconque des revendications précédentes,
**caractérisée en ce**
**qu'**au moins deux composants du groupe comprenant la portion élastique de la soupape de sortie (58), la portion élastique de la soupape d'entrée (52) et la portion élastique de la manette d'actionnement (56) présentent une forme qui permet un démoulage sans contre-dépouille dans une direction de démoulage spécifique respective, les deux composants (52, 56, 58), dans l'état monté de la tête de distribution, étant décalés l'un par rapport à l'autre par rapport à l'état de fabrication de telle sorte que leur direction de démoulage respective ne soit pas orientée parallèlement l'une à l'autre.

12. Tête de distribution (20) selon l'une quelconque des revendications précédentes,
**caractérisée en ce que**
la soupape de sortie (58) et/ou la soupape d'entrée (52) sont réalisées sous forme de soupape avec une ouverture de passage refermable, les ouvertures de passage étant complètement entourées par le matériau élastique de la portion de composant élastique (50).

13. Distributeur (10) pour distribuer notamment des liquides cosmétiques ou pharmaceutiques ou des aliments, comprenant
- un réservoir de liquide (12) et
- une tête de distribution (20),
**caractérisé en ce que**
la tête de distribution (20) est réalisée selon l'une quelconque des revendications précédentes.

14. Procédé de fabrication d'une tête de distribution (20) pour un distributeur (10), en vue de l'utilisation pour distribuer notamment des liquides cosmétiques ou pharmaceutiques et des aliments,
**caractérisé en ce que**
- une portion de composant élastique (50) est fabriquée à partir d'un matériau déformable élastiquement, cette portion de composant élastique (50) présentant au moins des portions élastiques de deux composants (52, 56, 58) du groupe comprenant une soupape d'entrée (52), une soupape de sortie (58) et une manette d'actionnement (56), et les au moins deux composants (52, 56, 58) présentant à chaque fois une portion de retenue constituée du matériau élastique en vue d'une disposition fixée l'un par rapport à l'autre dans le distributeur monté, et
- dans le cadre du montage, les au moins deux portions élastiques des au moins deux composants (52, 56, 58) sont fixées l'une par rapport à l'autre dans une position relative s'écartant de la position relative lors du moulage par injection, les portions de retenue étant disposées dans la position fixée l'une par rapport à l'autre et une région de connexion (62, 64) entre les portions de retenue de la portion de composant élastique (50) étant de ce fait déformée élastiquement.
